# EUROPEAN PATENT SPECIFICATION

(11) **EP 2 392 503 B1**
(45) Date of publication and mention of the grant of the patent: **26.12.2012**
(21) Application number: 11168270.4
(22) Date of filing: 31.05.2011
(51) Int. Cl.: B62B 9/24, A44B 11/25, B60R 22/10, B62B 3/14

(54) **Child harness fastener system**
Kindertragegurt-Befestigungssystem
Système fixateur de harnais pour enfant

(30) Priority: 01.06.2010 CN 201010194514; 15.09.2010 CN 201010283276
(43) Date of publication of application: 07.12.2011
(73) Proprietor: Wonderland Nurserygoods Company Limited, Central Hong Kong (CN)
(72) Inventor: Cui, Zong Wang, Central Hong Kong (CN)
(74) Representative: Epping - Hermann - Fischer

(56) References cited:
- EP-A1- 1 884 170
- GB-A- 2 295 198
- US-A- 3 605 207
- US-A- 4 660 260

## Description

### BACKGROUND OF THE INVENTION

### 1. Field of the Invention

The present invention relates to a harness fastener system suitable for use with a child carrier apparatus.

### 2. Description of the Related Art

Child carrier apparatuses (such as strollers, infant car seats, etc.) may generally include a harness fastener system that can attach multiple harness straps together. Typically, the harness fastener system can include a socket, a pair of lap strap fasteners, and a pair of shoulder strap fasteners. The lap strap fasteners can be respectively assembled with the shoulder strap fasteners, and then attached with the socket to restrain and protect the child in a seated position. Currently available designs for the fastener system usually require the assembly of many component parts (such as springs, sliding elements, etc.), which may be time-consuming and increase the manufacture cost.

GB 2 295 198 is considered to represent the closest prior art.

Therefore, there is a need for an improved harness fastener that can be simple in construction, reduce the manufacturing cost, and address at least the foregoing issues.

### SUMMARY

The present application describes a child harness fastener system suitable for use with a child carrier apparatus, such as a stroller, infant car seat, and the like. In one embodiment, the child harness fastener system comprising two strap fasteners, and a socket having a release button movably assembled at a side of the socket. In the described harness fastener system, each of the strap fasteners includes a spring finger and a catch hole. The socket includes two insert slots for engagement of the strap fasteners, and an interior provided with two resilient latch arms, each of the latch arms including a deflectable first end portion provided with a protrusion, and second end portion connected with a housing of the socket. Moreover, an inner side surface of the release button can comprise a protruding rib that rests in contact with the latch arms. When the two strap fasteners are locked with the socket, the protrusions of the latch arms are respectively engaged with the catch holes, and the spring fingers are respectively squeezed against the second end portions of the latch arms.

At least one advantage of the construction described herein is the ability to reduce the amount of component parts required for fabricating the fastener system. In particular, the socket can be simple to assemble, and does not require extra spring component parts. Moreover, the fastener system can be conveniently operated for unlocking and adjusting the strap to the desired length.

### BRIEF DESCRIPTION OF THE DRAWINGS

Figure 1 is an exploded view illustrating an embodiment of a child harness fastener system;
Figure 2 is a schematic view illustrating the construction of a socket, a first strap fastener and the release button in the fastener system shown in Figure 1;
Figure 3 is a schematic view illustrating the first strap fasteners locked with the socket;
Figure 4 is a cross-sectional view taken along section line 4 drawn in Figure 3;
Figure 5 is a cross-sectional view taken along section line 5 shown in Figure 3;
Figure 6 is a schematic view illustrating the first and second strap fasteners securely attached with the socket;
Figure 7 is a schematic view illustrating the first strap fastener provided with a lap strap in a clamped state; and
Figure 8 is a schematic view illustrating the first strap fastener provided with a lap strap in an unclamped state.

### DETAILED DESCRIPTION OF THE EMBODIMENTS

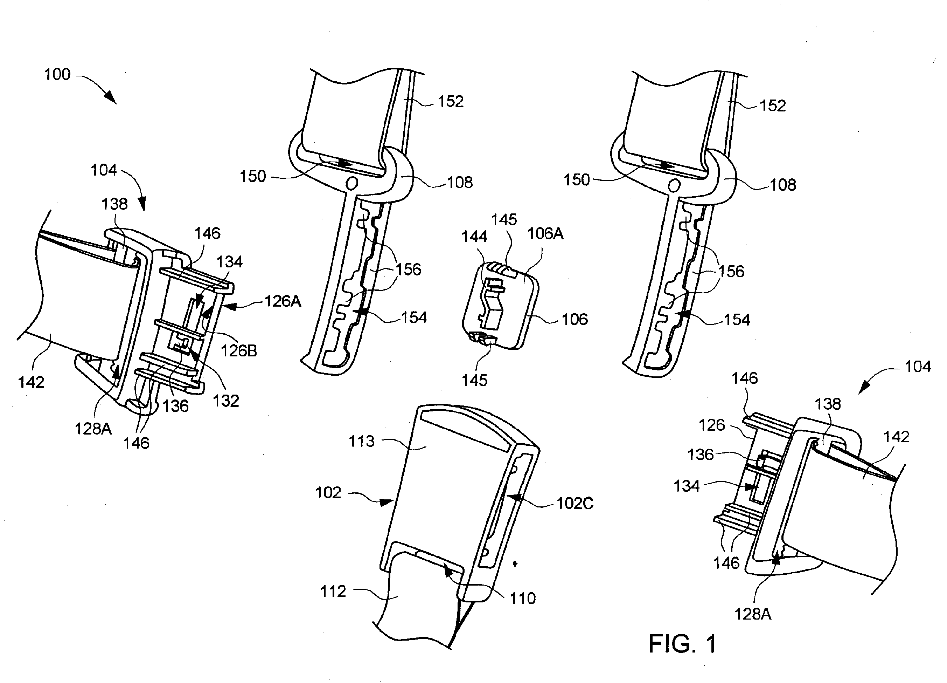

Figure 1 is an exploded view illustrating an embodiment of a child harness fastener system 100 suitable for use with a child carrier apparatus, such as a stroller, infant car seat, and the like. The child harness fastener system 100 can exemplary be a five-point harness fastener, comprising a socket 102, two first strap fasteners 104 that may be respectively secured with end portions of lap straps, and two second strap fasteners 108 that may be respectively secured with end portions of shoulder straps. The socket 102 can include a release button 106 operable to unlock the child harness fastener system 100, and a hole 110 for securing a crotch strap 112.

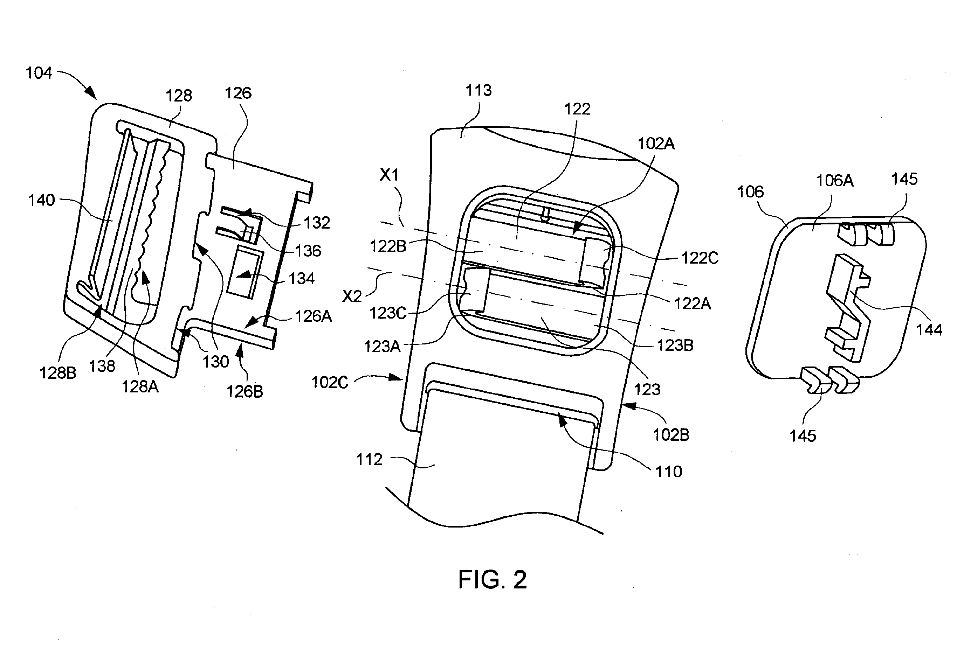

Figure 2 is a schematic view illustrating the construction of the socket 102, the first strap fastener 104 and the release button 106. The socket 102 can include a hollow housing 113 having an opening 102A formed at a central region, and insert slots 102B and 102C respectively provided at left and right lateral sides of the opening 102A. The opening 102A and insert slots 102B and 102C respectively communicate with a hollow interior of the housing 113. The hole 110 is located in a region of the housing 113 that is adjacent to a side of the opening 102A.

An interior of the housing 113 can include a pair of resilient latch arms 122 and 123 disposed substantially parallel to each other. In one embodiment, the latch arms 122 and 123 can be formed integrally with the housing 113. More specifically, the latch arm 122 can extend along a transversal axis X1 that joins the insert slots 102C and 102B, such that a first end portion 122A of the latch 122 where is formed a protrusion 122C is located adjacent to the insert slot 102B, and a second end portion 122B of the latch arm 122 is connected with the housing 113 at a position adjacent to the insert slot 102C. In turn, the latch arm 123 can extend along another transversal axis X2 parallel to the axis X1 that joins the insert slots 102B and 102C, such that a first end portion 123A of the latch arm 123 where is formed a protrusion 123C is located adjacent to the insert slot 102C, and a second end portion 123B of the latch 123 is connected with the housing 113 at a position adjacent to the insert slot 102B. The latch arms 122 and 123 are thus arranged in opposite orientations, e.g., the distal first end portion 122A of the latch arm 122 is located on the right side and adjacent to the second end portion 123B of the latch arm 123, and the distal first end portion 123A of the latch arm 123 is located on the left side and adjacent to the second end portion 122B of the latch arm 122 (as shown in Figure 2).

Referring again to Figures 1 and 2, each of the first strap fasteners 104 can include a tongue 126 that joined with a fastener body 128. The tongue 126 can be formed with a plate shape, while the fastener body 128 can have a frame construction adapted to secure an end portion of the lap strap 142. A joint portion of the fastener body 128 with the tongue 126 can include a plurality of alignment grooves 130 adapted to matingly engage with corresponding alignment ribs 156 provided on the second fastener 108. As shown, the alignment grooves 130 may be placed along a width of the tongue 126.

The tongue 126 can include a first surface 126A, and a second surface 126B opposite to the first surface 126A. An opening 132 and a catch hole 134 can be respectively formed in the tongue 126 from the first surface 126A to the second surface 126B. Moreover, a rim portion of the opening 132 can include a spring finger 136. As shown in Figure 2, the spring finger 136 may have a bent shape that is joined with a rim portion of the opening 132, bend toward the second surface 126B and project outside from the second surface 126B. The spring finger 136 and the catch hole 134 can be placed at positions respectively corresponding to the transversal axes X1 and X2. The fastener body 128 can define two spaced-apart openings 128A and 128B that are respectively exposed through a first and second side of the fastener body 128, and are separated by an anchor bar 138 extending along a width of the first strap fastener 104. In one embodiment, the anchor bar 138 can have a striated or toothed surface to promote its gripping with the lap strap 142.

The fastener body 128 can also include a strap clamp 140 that is formed adjacent to the opening 128B and facing one side of the anchor bar 138. In one embodiment, the first strap fastener 104, including the tongue 126, the fastener body 128, the anchor bar 138 and the clamp 140, can be formed in a single body by plastic molding. A portion of a lap strap 142 can loop around the anchor bar 138 and pass through the openings 128A and 128B to be securely held with the fastener body 128 of the first strap fastener 104. The strap clamp 140 can be biased to press against the looped portion of the lap strap 142 such that the lap strap 142 can be tightly clamped between the clamp 140 and the anchor bar 138. Should the length of the lap strap 142 need adjustment, the clamp 140 can be deflected to one side to release the clamping action applied on the lap strap 142. Once it is unclamped, the lap strap 142 can be slipped relative to the first strap fastener 104 for adjustment to a desirable length.

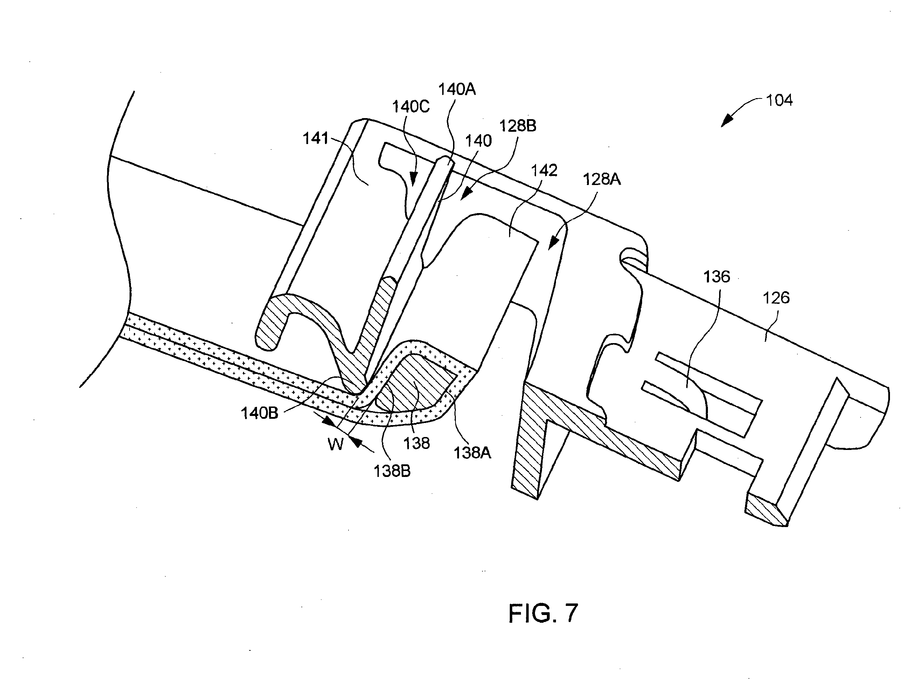

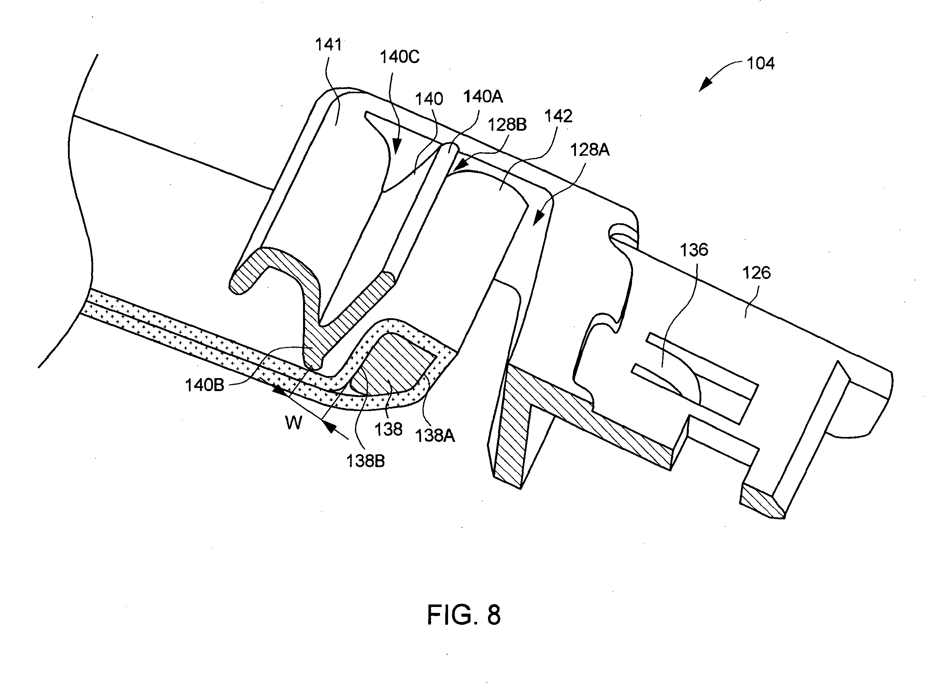

Figures 7 and 8 are schematic views illustrating in more details the construction and operation of the strap clamp 140 for tightly clamping and unclamping the lap strap 142. As shown, the lap strap 142 can pass through the opening 128A, loop around the anchor bar 138 from a first side 138A to an opposite second side 138B thereof, and then pass through the opening 128B. The strap clamp 140 can be formed in a single body including an actuator portion 140A and a clamp portion 140B joined together, and a resilient segment 141 connecting the clamp portion 140B with the fastener body 128 at a side of the opening 128B. The clamp portion 140B can be located at a first side of the fastener body 128 where the looped lap strap 142 extends away from the anchor bar 138, whereas the actuator portion 140A can project from an opposite second side of the fastener body 128 conveniently accessible to an operator. The resilient segment 141 can extend from a side of the opening 128B that is opposite to the anchor bar 138, bend toward the first side of the fastener body 128 where lies the lap strap 142, and then join with the clamp portion 140B. The actuator portion 140A can project at an inclined angle from the opening 128B opposite to the first side where lies the lap strap 142. With this construction, a recess 140C can be defined between the resilient segment 141 and the actuator portion 140A.

The strap clamp 140 can be elastically deflectable to move the clamp portion 140B relative to the anchor bar 138 between a clamped and unclamped position. In Figure 7, the lap strap 142 is shown in a clamped state where the clamp portion 140B can squeeze the lap strap 142 against the second side 138B of the anchor bar 138. In this clamped state, a distance between the second side 138B of the anchor bar 138 and the clamp portion 140B can be smaller than that between the second side 138B of the anchor bar 138 and the actuator portion 140A.

In Figure 8, the lap strap 142 is shown in an unclamped state. To unclamp the lap strap 142, an operator can push on the actuator portion 140A such that the clamp portion 140B can deflect away from the second side 138B of the anchor bar 138 in a direction that increases a distance W between the second side 138B of the anchor bar 138 and the clamp portion 140B. Once the clamp portion 140B has disengaged from the lap strap 142, the lap strap 142 can be movably adjusted to the desired length. In the unclamped state, a distance between the second side 138B of the anchor bar 138 and the clamp portion 140B can be greater than that between the second side 138B of the anchor bar 138 and the actuator portion 140A. After the lap strap 142 is adjusted to the desired length, the actuator portion 140A can be released and the clamp 140 can elastically recover its initial position. As a result, the clamp portion 140B moves in a direction that shortens the distance W between the second side 138B of the anchor bar 138 and the clamp portion 140B, until it contacts and squeezes the lap strap 142 against the anchor bar 138.

With the above construction of the strap clamp 140, an operator can easily unclamp the lap strap 142 by operating the actuator portion 140A, which facilitates the adjustment of the lap strap 142. It will be appreciated that the structure of the strap clamp 140 and anchor bar 138 can be applied in other fasteners for holding any harness straps.

Referring again to Figures 1 and 2, an inner surface 106A of the release button 106 can include a protruding rib 144 formed with a bent contour, and a plurality of retainer fingers 145 symmetrically placed at two opposite peripheral sides. The release button 106 can be movably assembled through the opening 102A of the housing 113, such that the rib 144 rests in contact with the latch arms 122 and 123. In particular, the shape of the rib 144 can be such that it respectively contacts with a region of the latch arm 122 located between the first and second end portions 122A and 122B, and with a region of the latch arm 123 located between the first and second end portions 123A and 123B. Accordingly, the first end portions 122A and 123A are respectively located at two opposite sides of the rib 144. During operation, the retainer fingers 145 can come in abutment against a rim of the opening 102A to prevent separation of the release button 106 from the housing 113.

Referring again to Figures 1 and 2, each of the second strap fasteners 108 can include a hole 150 for passage of a shoulder strap 152. The second strap fastener 108 can also include an elongated slot 154 through which an associated first strap fastener 104 can be engaged before it is inserted into the socket 102. A rim of the elongated slot 154 can include a plurality of protruding alignment ribs 156 that can match with the alignment grooves 130 provided on the first strap fastener 104. When the first strap fastener 104 is engaged through the elongated slot 154, the alignment ribs 156 can fit with the alignment grooves 130 to hold the first and second strap fasteners 104 and 108 in alignment and prevent their relative displacement.

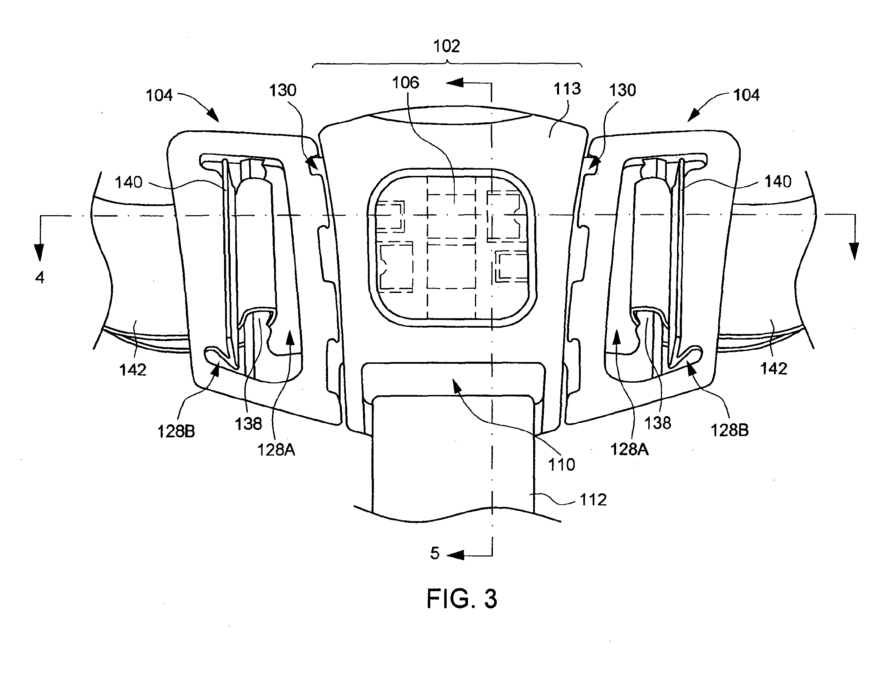

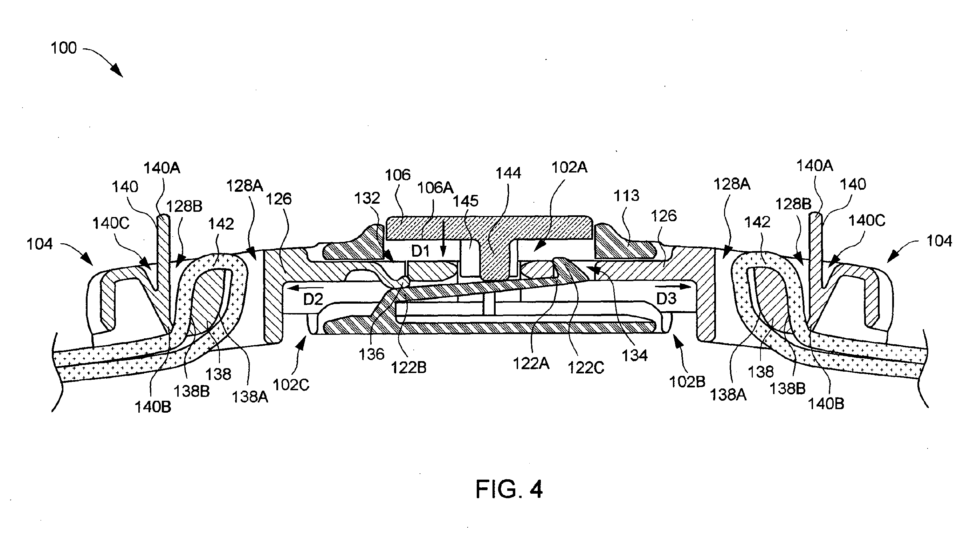

Figure 3 is a schematic view illustrating the first strap fasteners 104 locked with the socket 102, and Figure 4 is a cross-sectional view taken along section line 4 drawn in Figure 3. For clarity, the second strap fasteners 108 are omitted in these figures. When the first strap fasteners 104 are locked with the socket 102, the tongues 126 of the first strap fasteners 104 are respectively inserted through the insert slots 102B and 102C into the socket 102. Moreover, the protrusions 122C and 123C of the latch arms 122 and 123 can respectively engage through the catch holes 134 provided on the tongues 126 (e.g., the protrusion 123C of the latch arm 123 can engage with the catch hole 134 of the tongue 126 inserted from the left side of the socket 102, and the protrusion 122C of the latch arm 122 can engage with the catch hole 134 of the tongue 126 inserted from the right side of the socket 102). As the tongues 126 are locked with the latch arms 122 and 123, the spring fingers 136 can be respectively squeezed against the second end portions 122B and 123B of the latch arms 122 and 123 (e.g., the spring finger 136 of the tongue 126 inserted from the left side is squeezed against the second end portion 122B of the latch arm 122, whereas the spring finger 136 of the tongue 126 inserted from the right side is squeezed against the second end portion 123B of the latch arm 123). The compressed spring fingers 136 can apply spring forces on the first strap fasteners 104 that tend to bias the first strap fasteners 104 away from each other, which can help to keep the protrusions 122C and 123C tightly engaged with the catch holes 134. With this construction, the engagement points of the first strap fasteners 104 with the socket 102 are respectively aligned with different transversal directions (e.g., the engagement point of the socket 102 with the first strap fastener 104 inserted from the left side of Figure 1 can be located on the axis X2, whereas the engagement point of the socket 102 with the first strap fastener 104 inserted from the right side can be located on the axis X1) .

When the release button 106 is pushed in a direction D1 toward the interior of the housing 113, the rib 144 can push the latch arms 122 and 123 (in particular the first end portions 122A and 123A) to deflect in the direction D1, which causes the protrusions 122C and 123C to respectively disengage from the catch holes 134. As the protrusions 122C and 123C become disengaged from the catch holes 134, the spring fingers 136 can elastically recover their initial state, which push and eject the first strap fasteners 104 in opposite directions D2 and D3 out of the socket 102. Once no pressure is applied on the release button 106, the latch arms 122 and 123 can elastically turn away from the bottom of the housing 113 to recover their initial state. This displacement of the latch arms 122 and 123 can drive the release button 106 to move in a direction opposite to the direction D1 to recover its initial state.

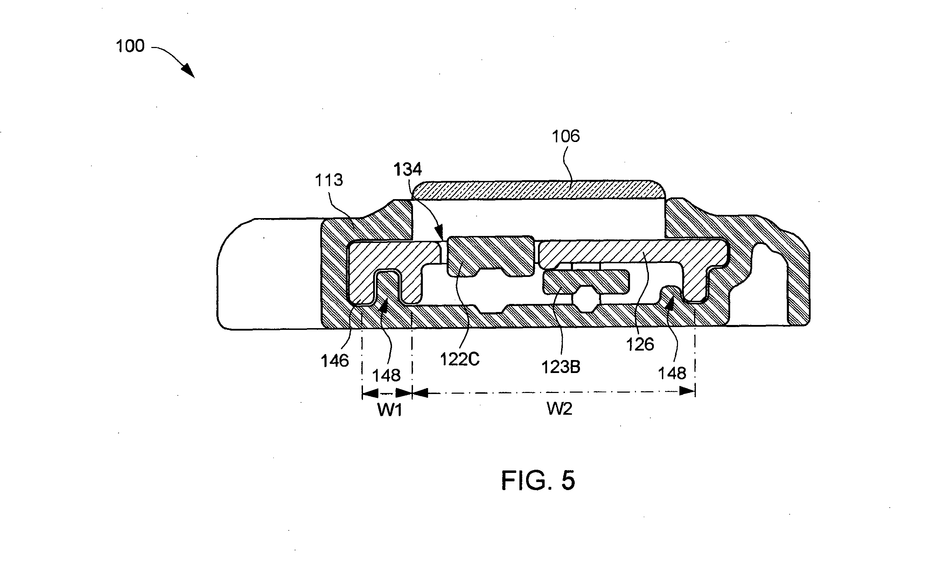

Figure 5 is a cross-sectional view taken along section line 5 shown in Figure 3. The fastener system 100 may also include an alignment structure to prevent erroneous insertion of the first strap fasteners 104 into the socket 102. As shown in Figure 5, this alignment structure can include a first mating structure 146 (for example, comprised of protruding ribs and/or recessed slots) disposed at one side of each tongue 126 (for example, the second side surface 126B), and a second mating structure 148 (for example, comprised of protruding ribs and/or recessed slots) disposed in the housing 113 adjacent to the corresponding insert slots 102B and 102C. The mating structure 146 may be asymmetric relative to a center of the tongue 126, for example, comprised of three consecutive ribs separated by unequal distances W1 and W2. Accordingly, the first and second mating structures 146 and 148 can properly fit with each other only when each first strap fastener 104 is inserted at the correct side of the socket 102 associated therewith and with a correct orientation. In this manner, erroneous operation or insertion can be prevented.

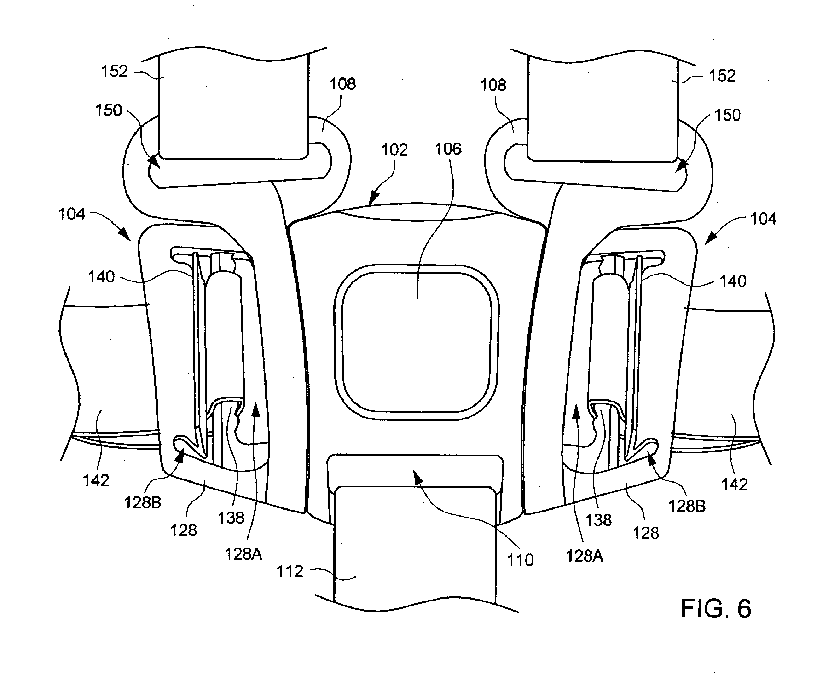

Figure 6 is a schematic view illustrating the first and second strap fasteners 104 and 108 securely attached with the socket 102. For attaching the fastener system 100, the first and second strap fasteners 104 and 108 have to be mounted with each other before the first strap fasteners 104 are engaged with the socket 102. More specifically, the tongue 126 of each first strap fastener 104 is first passed through the elongated slot 154 of the associated second strap fastener 108, until the alignment ribs 156 on the second strap fastener 108 are respectively fitted with the alignment grooves 130 on the first strap fastener 104. Then, the tongues 126 of the first strap fasteners 104 can be respectively inserted through the insert slots 102B and 102C into the socket 102, until the latch arms 122 and 123 respectively engage with the catch holes 134 of the tongues 126. The first and second strap fasteners 104 and 108 can be thereby locked in position with the socket 102.

It is worth noting that the construction and operation described herein are not limited to five-point fastener systems, and may also be applicable to three-point fasteners without shoulder straps 152 and second strap fasteners 108.

At least one advantage of the construction described herein is the ability to reduce the amount of component parts required for fabricating the fastener system. In particular, the socket can be simple to assemble, and does not require extra spring component parts. Moreover, the fastener system can be conveniently operated for unlocking and adjusting the strap to the desired length.

Realizations in accordance with the present invention therefore have been described only in the context of particular embodiments. These embodiments are meant to be illustrative and not limiting. Many variations, modifications, additions, and improvements are possible. Accordingly, plural instances may be provided for components described herein as a single instance. Structures and functionality presented as discrete components in the exemplary configurations may be implemented as a combined structure or component. These and other variations, modifications, additions, and improvements may fall within the scope of the invention as defined in the claims that follow.

## Claims

1. A child harness fastener system comprising two strap fasteners (104), and a socket (102) having a release button (106) movably assembled at a side of the socket, **characterized in that**:
each of the strap fasteners includes a spring finger (136) and a catch hole (134);
the socket includes two insert slots (102C;102B) for engagement of the strap fasteners, and an interior provided with two resilient latch arms (122,123), each of the latch arms including a deflectable first end portion (122B,123B) provided with a protrusion (122C,123C) and second end portion connected with a housing (123) of the socket;
an inner side surface (106B) of the release button (106) comprises a protruding rib that rests in contact with the latch arms (122,134), and
when the two strap fasteners (104) are locked with the socket, the protrusions (122C,123C) of the latch arms (122,123) are respectively engaged with the catch holes (134), and the spring fingers (136) are respectively squeezed against the second end portions (122B,123B) of the latch arms (122,123).

2. The child harness fastener system according to claim 1, wherein the protruding rib pushes the latch arms in movement when the release button is pushed inward, whereby the protrusions are disengaged from the catch holes, and the spring fingers respectively push against the second end portions to eject the strap fasteners outside the socket.

3. The child harness fastener system according to claim 1, wherein each of the strap fasteners includes a fastener body (128); and a tongue (126) extending from one side of the fastener body,
the tongues of the strap fasteners being respectively inserted through the insert slots when the strap fasteners are locked with the socket.

4. The child harness fastener system according to claim 3, wherein the tongue of each of the strap fasteners includes an opening spaced apart from the catch hole, and the spring finger is connected with a rim of the opening.

5. The child harness fastener system according to claim 1, wherein the protruding rib rests in contact with the latch arms at a region located between the first and second end portions thereof.

6. The child harness fastener system according to claim 1, wherein the latch arms extend along two generally parallel axes that join the two insert slots, the first end portions being respectively located at two opposite sides of the protruding rib.

7. The child harness fastener system according to claim 1, wherein the latch arms and the housing of the socket are formed in a single body.

8. The child harness fastener system according to claim 1, wherein at least one of the strap fasteners further includes a first mating structure (146); and the housing of the socket includes a second mating (148) structure adapted to match with the first mating structure to prevent erroneous insertion of the first strap fastener.

9. The child harness fastener system according to claim 3, wherein the fastener body of at least one of the strap fasteners includes two openings separated by an anchor bar (138), and a deflectable strap (140) clamp disposed at a position adjacent to one of the two openings and facing the anchor bar.

10. The child harness fastener system according to claim 9, wherein the clamp includes a clamp portion (140B) located at first side of the fastener body, and an actuator (140A) portion projecting from an opposite second side of the fastener body, and the two openings are adapted to receive the passage of a strap (142) that loops around the anchor bar and extends away from the anchor bar at the first side of the fastener body.

11. The child harness fastener system according to claim 10, wherein the strap clamp is elastically deflectable to either decrease or increase a distance between the clamp portion and the anchor bar for either clamping a looped portion of a strap between the anchor bar and the clamp portion, or unclamping the looped portion of the strap.

12. The child harness fastener system according to claim 10, wherein the clamp portion of the strap clamp is connected with the fastener body via a bent segment.

13. The child harness fastener system according to claim 1, wherein the socket is connected with a crotch strap (112), and the first strap fasteners are respectively connected with lap straps.

14. The child harness fastener system according to claim 13, further including two second strap fasteners respectively connected with shoulder straps (152), wherein each of the second strap fasteners includes an elongated slot (154) through which the tongue of one associated first strap fastener is passed to assemble the first strap fastener with the second strap fastener.

15. The child harness fastener system according to claim 14, wherein a rim of the elongated slot includes a plurality of alignment ribs (156), and the fastener body of one associated first strap fastener includes a plurality of alignment grooves (130) adapted to fit with the alignment ribs to ensure correct assembly of the first and second strap fasteners.

## Patentansprüche

1. Kindergeschirr-Befestigungssystem, umfassend zwei Gurtbefestiger (104) und ein Gurtschloss (102) mit einem Löseknopf (106), der beweglich an einer Seite des Gurtschlosses montiert ist, **dadurch gekennzeichnet, dass**:
jeder der Gurtbefestiger einen Federzinken (136) und ein Fangloch (134) enthält;
das Gurtschloss zwei Einschiebeschlitze (102C, 102B) zum Koppeln der Gurtbefestiger sowie ein Inneres enthält, in dem zwei federnde Klinkenarme (122, 123) vorgesehen sind, wobei jeder der Klinkenarme einen abbiegbaren ersten Endbereich (122B, 123B), an dem ein Vorsprung (122C, 123C) vorgesehen ist, und einen zweiten Endbereich enthält, der mit einem Gehäuse (113) des Gurtschlosses verbunden ist;
eine innere Seitenfläche (106A) des Löseknopfes (106) eine vorspringende Rippe (144) umfasst, die in Kontakt an den Klinkenarmen (122, 123) liegt; und wenn die beiden Gurtbefestiger (104) am Gurtschloss (102) verriegelt sind, die Vorsprünge (122C, 123C) der Klinkenarme (122, 123) jeweils mit den
Arretierungslöchern (134) gekoppelt sind, und die Federzinken (136) jeweils gegen die zweiten Endbereiche (122B, 123B) der Klinkenarme (122, 123) gequetscht sind.

2. Kindergeschirr-Befestigungssystem nach Anspruch 1, wobei die vorspringende Rippe in Bewegung auf die Klinkenarme drückt, wenn der Löseknopf nach innen gedrückt wird, wodurch die Vorsprünge von den Arretierungslöchern gelöst werden und die Federzinken jeweils auf die zweiten Endbereiche drücken, um die Gurtbefestiger aus dem Gurtschloss zu werfen.

3. Kindergeschirr-Befestigungssystem nach Anspruch 1, wobei jeder der Gurtbefestiger einen Befestiger-Hauptteil (128) und eine Zunge (126) enthält, die sich von einer Seite des Befestiger-Hauptteils erstreckt, wobei die Zungen der Gurtbefestiger jeweils durch die Einschiebeschlitze eingeführt werden, wenn die Gurtbefestiger mit dem Gurtschloss verriegelt werden.

4. Kindergeschirr-Befestigungssystem nach Anspruch 3, wobei die Zunge jedes der Gurtbefestiger eine Öffnung enthält, die einen Abstand vom Arretierungsloch aufweist, und der Federzinken mit einem Rand der Öffnung verbunden ist.

5. Kindergeschirr-Befestigungssystem nach Anspruch 1, wobei die vorspringende Rippe in Kontakt mit den Klinkenarmen an einem Bereich anliegt, der sich zwischen deren ersten und zweiten Endbereichen befindet.

6. Kindergeschirr-Befestigungssystem nach Anspruch 1, wobei sich die Klinkenarme entlang zwei allgemein parallelen Achsen erstrecken, die mit den beiden Einschiebeschlitzen zusammenfallen, wobei sich die ersten Endbereiche jeweils an zwei gegenüberliegenden Seiten der vorspringenden Rippe befinden.

7. Kindergeschirr-Befestigungssystem nach Anspruch 1, wobei die Klinkenarme und das Gehäuse des Gurtschlosses einstückig ausgebildet sind.

8. Kindergeschirr-Befestigungssystem nach Anspruch 1, wobei mindestens einer der Gurtbefestiger weiter eine erste Passstruktur (146) enthält und das Gehäuse des Gurtschlosses eine zweite Passstruktur (148) enthält, die geeignet ist, mit der ersten Passstruktur zusammenzupassen, um falsches Einsetzen des ersten Gurtbefestigers zu verhindern.

9. Kindergeschirr-Befestigungssystem nach Anspruch 3, wobei der Befestiger-Hauptteil mindestens eines der Gurtbefestiger zwei Öffnungen, die durch eine Ankerstange (138) getrennt sind, und eine abbiegbare Gurtklemme (140) enthält, die an einer Position angeordnet ist, die einer der beiden Öffnungen benachbart und der Ankerstange zugewandt ist.

10. Kindergeschirr-Befestigungssystem nach Anspruch 9, wobei die Klemme einen Klemmbereich (140B), der sich an der ersten Seite des Befestiger-Hauptteils befindet, und einen Betätigungsteil (140A) enthält, der von einer gegenüberliegenden zweiten Seite des Befestiger-Hauptteils vorspringt, und die beiden Öffnungen geeignet sind, den Durchlauf eines Gurts (142) aufzunehmen, der eine Schleife um die Ankerstange bildet und sich von der Ankerstange weg an der ersten Seite des Befestiger-Hauptteils erstreckt.

11. Kindergeschirr-Befestigungssystem nach Anspruch 10, wobei die Gurtklemme elastisch abbiegbar ist, um einen Abstand zwischen dem Klemmbereich und der Ankerstange entweder zu vergrößern oder zu verringern, um entweder einen Schleifenbereich eines Gurts zwischen der Ankerstange und dem Klemmbereich einzuklemmen oder den Schleifenbereich des Gurts zu lösen.

12. Kindergeschirr-Befestigungssystem nach Anspruch 10, wobei der Klemmbereich der Gurtklemme über ein gebogenes Segment mit dem Befestiger-Hauptteil verbunden ist.

13. Kindergeschirr-Befestigungssystem nach Anspruch 1, wobei das Gurtschloss mit einem Schrittgurt (112) verbunden ist und die ersten Gurtbefestiger jeweils mit Beckengurten verbunden sind.

14. Kindergeschirr-Befestigungssystem nach Anspruch 13, weiter enthaltend zwei zweite Gurtbefestiger, die jeweils mit Schultergurten (152) verbunden sind, wobei jeder der zweiten Gurtbefestiger einen länglichen Schlitz (154) enthält, durch den die Zunge eines zugehörigen ersten Gurtbefestigers hindurchgesteckt wird, um den ersten Gurtbefestiger mit dem zweiten Gurtbefestiger zusammenzusetzen.

15. Kindergeschirr-Befestigungssystem nach Anspruch 14, wobei ein Rand des länglichen Schlitzes eine Vielzahl von Ausrichtungsrippen (156) enthält und der Befestiger-Hauptteil eines zugehörigen ersten Gurtbefestigers eine Vielzahl von Ausrichtungsaussparungen (130) enthält, die geeignet sind, zu den Ausrichtungsrippen zu passen, um korrektes Zusammensetzen der ersten und zweiten Gurtbefestiger sicherzustellen.

## Revendications

1. Système de fixation de harnais pour enfants, comprenant deux attaches de sangles (104) et un socle (102) possédant un bouton de déverrouillage (106) assemblé de manière mobile sur un côté du socle, **caractérisé en ce que** :
chacune des attaches de sangles comprend un doigt à ressort (136) et un trou d'accrochage (134) ;
le socle comprend deux fentes d'insertion (102C, 102 B) pour l'enclenchement des attaches de sangles et un intérieur pourvu de deux bras de verrouillage élastiques (122, 123) ; chacun des bras de verrouillage comportant une première partie d'extrémité pivotante (122B, 123B) pourvue d'une protubérance (122C, 123C) ;
et une seconde partie d'extrémité connectée avec un boîtier (113) du socle ;
une surface latérale intérieure (106A) du bouton de déverrouillage (106) comprend une nervure protubérante (144) qui repose en contact avec les bras de verrouillage (122, 134) ; et lorsque les deux attaches de sangles (104) sont verrouillées au socle (102),
les protubérances (122C, 123C) des bras de verrouillage (122, 123) sont respectivement enclenchées dans les trous d'accrochage (134),
et les doigts à ressort (136) sont respectivement pressés contre les secondes parties d'extrémité (122B, 123B) des bras de verrouillage (122, 123).

2. Système de fixation de harnais pour enfants selon la revendication 1, dans lequel la nervure protubérante entraîne en un mouvement poussée les bras de verrouillage lorsque le bouton de déverrouillage est appuyé vers l'intérieur, sachant que les protubérances sont désengagées des trous d'accrochage, et que les doigts à ressort poussent respectivement contre les secondes parties d'extrémité pour éjecter les attaches de sangles hors du socle.

3. Système de fixation de harnais pour enfants selon la revendication 1, dans lequel chacune des attaches de sangles comporte un corps d'attache (128) et une languette (126) s'étendant depuis un côté du corps d'attache, les languettes des attaches de sangles étant respectivement insérées à travers les fentes d'insertion lorsque les attaches de sangles sont verrouillées au socle.

4. Système de fixation de harnais pour enfants selon la revendication 3, dans lequel la languette de chacune des attaches de sangles comprend une ouverture distante du trou d'accrochage, et le doigt à ressort est connecté avec une arête de l'ouverture.

5. Système de fixation de harnais pour enfants selon la revendication 1, dans lequel la nervure protubérante repose en contact avec les bras de verrouillage dans une zone située entre les premières et les secondes parties d'extrémité de ces derniers.

6. Système de fixation de harnais pour enfants selon la revendication 1, dans lequel les bras de verrouillage s'étendent le long de deux axes généralement parallèles qui joignent les deux fentes d'insertion, les premières parties d'extrémité étant respectivement situées sur deux côtés opposés de la nervure protubérante.

7. Système de fixation de harnais pour enfants selon la revendication 1, dans lequel les bras de verrouillage et le boîtier du socle sont formés en un corps unique.

8. Système de fixation de harnais pour enfants selon la revendication 1, dans lequel l'une au moins des attaches de sangles comprend en outre une première structure conjuguée (146) et le boîtier du socle comprend une seconde structure conjuguée (148) adaptée pour se conjuguer avec la première structure conjuguée afin de prévenir une insertion erronée de la première attache de sangle.

9. Système de fixation de harnais pour enfants selon la revendication 3, dans lequel le corps d'attache de l'une au moins des attaches de sangles comprend deux ouvertures séparées par une barre d'ancrage (138) et une bride à sangle pivotante (140) disposée à une position adjacente à l'une des deux ouvertures et faisant face à la barre d'ancrage.

10. Système de fixation de harnais pour enfants selon la revendication 9, dans lequel la bride comprend une partie d'attache (140B) située sur un premier côté du corps d'attache, et une partie d'actionneur (140A) faisant saillie depuis un second côté opposé du corps d'attache, et les deux ouvertures sont adaptées pour recevoir le passage d'une sangle (142) qui est en boucle autour de la barre d'ancrage et s'étend depuis la barre d'ancrage sur le premier côté du corps d'attache.

11. Système de fixation de harnais pour enfants selon la revendication 10, dans lequel la bride à sangle est élastiquement pivotante soit pour augmenter, soit pour réduire une distance entre la partie d'attache et la barre d'ancrage pour soit pincer une partie en boucle d'une sangle entre la barre d'ancrage et la partie d'attache, soit relâcher la partie en boucle de la sangle.

12. Système de fixation de harnais pour enfants selon la revendication 10, dans lequel la partie d'attache de la bride à sangle est connectée au corps d'attache via un segment cintré.

13. Système de fixation de harnais pour enfants selon la revendication 1, dans lequel le socle est connecté à une sangle d'entre-jambes (112) et les premières attaches de sangles sont respectivement connectées à des sangles abdominales.

14. Système de fixation de harnais pour enfants selon la revendication 13, comprenant en outre deux secondes attaches de sangles respectivement connectées à des sangles d'épaules (152), dans lequel chacune des secondes attaches de sangles comprend une fente allongée (154) à travers laquelle se glisse la languette d'une première attache de sangle associée pour assembler la première attache de sangle avec la seconde attache de sangle.

15. Système de fixation de harnais pour enfants selon la revendication 14, dans lequel une arête de la fente allongée comprend une multitude de nervures d'alignement (156) et le corps d'attache d'une première attache de sangle associée comprend une multitude de rainures d'alignement (130) adaptées pour se conjuguer avec les nervures d'alignement afin d'assurer l'assemblage correct de la première et de la seconde attaches de sangle.
